# EUROPÄISCHE PATENTSCHRIFT

(11) **EP 2 458 302 B1**
(45) Veröffentlichungstag und Bekanntmachung des Hinweises auf die Patenterteilung: **27.03.2013**
(21) Anmeldenummer: 11009272.3
(22) Anmeldetag: 22.11.2011
(51) Int. Cl.: F24J 2/52, F16B 7/04, H01L 31/042

(54) **Verbinderelement und Vorrichtung zur Befestigung von Solarmodulen**
Connector element and device for fixing solar modules
Elément de liaison et dispositif de fixation de modules solaires

(30) Priorität: 26.11.2010 DE 102010052505
(43) Veröffentlichungstag der Anmeldung: 30.05.2012
(73) Patentinhaber: VM Edelstahltechnik GmbH, 58840 Plettenberg (DE)
(72) Erfinder: Mächtle, Daniel, 58840 Plettenberg (DE)
(74) Vertreter: Jakelski, Joachim

(56) Entgegenhaltungen:
- DE-U1- 8 912 469
- DE-U1-202004 017 022
- DE-U1-202009 007 517
- JP-A- 2004 124 665

## Beschreibung

Die vorliegende Erfindung betrifft ein Verbinderelement zur Verbindung von zwei C-Profilschienen. Ferner betrifft die Erfindung eine Vorrichtung zur Befestigung von Solarelementen.

Bei der Montage von Stützgerüsten, Unterkonstruktionen oder dergleichen, beispielsweise für Solaranlagen, sind verschiedene Bauteile miteinander zu verbinden. Grundbauelemente für derartige Konstruktionen sind Profilschienen, insbesondere C-Profilschienen, die mit anderen Bauteilen, wie beispielsweise Dachhaken, verschiedenartigen Klemmen und insbesondere auch mit weiteren Profilschienen, fest zu verbinden sind.

Eine gattungsgemäße Vorrichtung zum lösbaren Verbinden von zwei Profilstäben geht aus der DE 89 12 469 U1 hervor. Bei diesem Verbinderelement zur Verbindung von zwei Profilschienen mit einem ersten und einem zweiten, gelenkig mit dem ersten verbundenen Schenkel weisen die Schenkel einen mittigen Befestigungsbereich und von diesem jeweils seitlich über den Befestigungsbereich ragende Vorsprünge auf, die im montierten Zustand an Vorsprüngen der Profilschienen als Widerlager anliegen. Im montierten Zustand geht die Gelenkfunktion verloren, da die beiden zu verbindenden Profilschienen aneinander anliegen, was durch entsprechende Gehrungsschnitte ermöglicht wird.

Aus der DE 10 2005 007 184 B3 ist ein Gestell zur Anordnung von Solarmodulen bekannt geworden, das aus mindestens zwei beabstandet voneinander angeordneten flächigen Rahmen besteht, die jeweils mit den Rahmenseiten vorzugsweise ein Dreieck bilden, wobei jeweils eine Rahmenseite zur Boden- oder Dachfläche geneigt ausgebildet ist. Auf zwei benachbarten Rahmen sind jeweils auf der geneigten Rahmenseite verschiebbar und fixierbar Tragprofilstücke zur Abstützung und Fixierung eines Solarmoduls angeordnet. Über die Tragprofilstücke erfolgt ebenfalls die Verbindung zu den benachbart angeordneten Rahmenseiten beweglich zueinander und fixierbar miteinander. Die Rahmenseiten sind auch beweglich zueinander und fixierbar miteinander verbunden und/oder weisen mindestens eine Längenverstelleinrichtung auf. Im schräg gestellten Zustand kann die Rahmenanordnung verkleidet werden. Hierzu ist die zur geneigten Rahmenseite benachbart angeordnete und nicht an der Dach- oder Bodenfläche befestigte Rahmenseite ein T-Profil, wobei jeweils die Hälfte einer Fußbreite zur Befestigung der Verkleidung dient. Diese Art der Befestigung ist aufwendig. Die Befestigung der Solarelemente aneinander wird hier mittels Schraubverbindungen bewerkstelligt, die in Stegen angeordnet sind, die von den Tragprofilstücken wegstehen. Durch diese Anordnung ist kein kompakter Aufbau möglich.

Aus dem Stand der Technik sind bereits Verbinderelemente bekannt, die zwei zueinander im rechten Winkel angeordnete Schenkel umfassen. Aus der DE 20 2009 017 491 U1 ist ferner ein Verbinderelement bekannt geworden, welches zwei in einem Winkel zueinander stehende Schenkel aufweist, die gelenkig miteinander verbunden sind. Auf diese Weise können Bauteile, insbesondere Profilschienen, in einem nahezu beliebigen Winkel miteinander verbunden werden. Diese Verbinderelemente weisen Schenkel mit Vorsprüngen auf, welche oben auf die Profilschiene aufgesetzt mittels an sich bekannter Gewindeplatten und Schrauben an der Profilschiene befestigt werden. Die Führungsleisten dienen der vereinfachten Positionierung des Verbinderelements auf der Profilschiene. Hierzu sind die seitlichen Führungsleisten so gestaltet, dass die Stege oder Abschnitte der Profilschiene von außen umgreifen und so die Positionierung und die Fixierung des Verbinderelements auf der Profilschiene erleichtern und die Verbindung stabilisieren.

Eine solche Befestigung weist bereits große Vorteile auf, da aufgrund der beschriebenen Positionierung eine schnelle und präzise Befestigung möglich ist.

Problematisch ist allerdings, dass bei einer Befestigung zweier Profilschienen in einem Winkel von beispielsweise 90° die beiden Schenkel sehr lang ausgebildet werden müssten, um den Spalt zu überbrücken, der durch die beiden im Winkel zueinander stehenden Profilschienen entsteht. Darüber hinaus umgreifen die Schenkel die Profilschienen an ihrer Oberseite, sodass an dieser Stelle keine weitere Befestigung beispielsweise von Solarelementen möglich ist.

Eine Vorrichtung zum Verbinden zweier Montageprofile sowie eine Baugruppe mit einer derartigen Vorrichtung geht ferner aus der DE 20 2004 017 022 U1 hervor. Bei dieser Profilverbindungsvorrichtung können die miteinander zu verbindenden beiden Montageprofile unter einem von 90° abweichenden Winkel miteinander verbunden werden. Hierzu ist eine gelenkige Verbindung zweier Verbindungsschenkel vorgesehen. Die Gelenkfunktion kann rein prinzipiell im verbundenen Zustand der beiden zu verbindenden Montageprofile erhalten bleiben. Dies erfordert jedoch eine aufwendige, präzise Montage und gegebenenfalls Nachjustage während der Befestigung der Profilverbindungsvorrichtung.

Eine Vorrichtung zur Verbindung von zwei Profilelementen geht ferner aus der JP 2004124665 A hervor. Auch bei dieser Verbindungsvorrichtung ist jedoch vorgesehen, dass die beiden Profilelemente durch einen entsprechenden Gehrungsschnitt aneinanderstoßen. Eine Gelenkfunktion ist nicht ohne Weiteres möglich.

Der Erfindung liegt daher die Aufgabe zugrunde, ein Verbinderelement der eingangs beschriebenen Art dahingehend weiterzubilden, dass zum einen eine Befestigung von im Winkel zueinander angeordneten Profilschienen problemlos möglich ist und dass zum anderen über die praktisch gesamte Länge der Profilschiene insbesondere auch dann, wenn sie beispielsweise im Winkel mit einer anderen Profilschiene verbunden ist, beispielsweise Solarelemente an der Profilschiene befestigt werden können. Es soll mit anderen Worten kein Befestigungs-Bauraum verloren gehen. Diese Aufgabe wird durch ein Verbinderelement gelöst, wie es Gegenstand des unabhängigen Anspruchs 1 ist.

Aufgabe der Erfindung ist es auch, eine Vorrichtung zur Befestigung von Solarelementen zu vermitteln, welche auf einfache Weise herstellbar, stabil und im fertig montierten Zustand insbesondere auch von Winden erzeugten Belastungen standhält.

Die Aufgabe wird ferner gelöst durch eine Vorrichtung zur Befestigung von Solarelementen mit den Merkmalen des Anspruchs 10.

Das erfindungsgemäße Verbinderelement zur Verbindung von zwei Profilschienen mit einem ersten und mit einem zweiten, gelenkig mit dem ersten verbundenen Schenkel, wobei wenigstens ein Schenkel einen mittigen Befestigungsbereich und von diesem jeweils seitlich über den Befestigungsbereich ragende Vorsprünge aufweist, die im montierten Zustand an entsprechenden Vorsprüngen der Profilschiene als Widerlager anliegen, ist dadurch gekennzeichnet, dass es einen Anschlag aufweist, welcher den mittigen Befestigungsbereich und die jeweils seitlich über dem Befestigungsbereich vorhandenen Vorsprünge gelenkseitig begrenzt. Auf diese Weise kann das Verbinderelement auf sehr vorteilhafte Weise in die Profilschiene eingeschoben werden, sodass zum einen bei einer Anordnung von zwei Profilschienen im Winkel zueinander der Drehpunkt in Richtung Unterseite der Profilschiene verlagert wird. Der Anschlag ermöglicht eine schnelle und passgenaue Montage. Hierdurch steigt die Variabilität und die Schenkel können kürzer bauen als bei einer Anordnung eines Verbinderelements an der Oberseite der Profilschienen. Außerdem ist durch das Hineinstecken des Schenkels des Verbinderelements in die Profilschiene sichergestellt, dass an der Oberseite der Profilschiene kein Bauraum verlorengeht, sodass dort beispielsweise Solarelemente über die gesamte Länge der Profilschiene befestigt werden können. Rein prinzipiell kann vorgesehen sein, dass beide Schenkel jeweils einen mittigen Befestigungsbereich und von diesem jeweils seitlich über den Befestigungsbereich ragende Vorsprünge aufweisen, die jeweils im montierten Zustand an Vorsprüngen einer Profilschiene als Widerlager anliegen. Auf diese Weise kann das Profilelement auf die oben beschriebene Weise jeweils in zwei aneinandergrenzende Profilschienen gesteckt werden, sodass diese im Winkel zueinander befestigbar sind. Sehr vorteilhaft ist vorgesehen, dass der Befestigungsbereich zwei Löcher aufweist, die insbesondere mit Gewinden versehen sind. Durch diese beiden Löcher ist zum einen eine Befestigung des Schenkels in der Profilschiene möglich, zum anderen können auch unmittelbar an dem Schenkel Bauteile auf der Profilschiene befestigt werden, ohne dass zusätzliche Gewindeplatten oder dergleichen erforderlich wären.

Bei einer anderen Ausführungsform ist vorgesehen, dass ein Schenkel einen mittigen Befestigungsbereich und von diesem jeweils seitlich über den Befestigungsbereich ragende Vorsprünge aufweist, die im montierten Zustand an Vorsprüngen der Profilschiene als Widerlager anliegen und dass eine Fläche des anderen Schenkels parallel zu den seitlichen Außenkanten seitliche Führungsleisten aufweist. Diese Ausbildung kombiniert die vorteilhafte Ausgestaltung eines in die Profilschiene steckbaren Schenkels mit einem die Profilschiene übergreifenden Schenkel und kann beispielsweise bei einer stumpfwinkligen Anordnung zweier Profilschienen sehr vorteilhaft vorgesehen werden.

Dabei ist vorteilhafterweise vorgesehen, dass die den seitlichen Führungsleisten abgewandte Fläche des Schenkels eine konvexe Wölbung aufweist. Statt einer konvexen Wölbung kann auch eine leichte Abrundung der Oberfläche vorgesehen sein. Hierdurch wird zum einen die Materialstärke des Verbinderelements erhöht und damit dessen Stabilität vergrößert, zum anderen wird hierdurch die Ausbildung von scharfen Kanten vermieden, sodass die Handhabung für den Monteur angenehmer und sicherer ist.

Dieser Schenkel weist ein Rundloch oder ein Langloch auf. Ein Langloch hat gegenüber einem Rundloch den Vorteil, dass die Befestigung des Verbinderelements variabler gestaltet werden kann und die Verbindung zwischen dem Verbinderelement und dem Bauteil über das Langloch eingestellt werden kann.

Eine vorteilhafte Ausgestaltung sieht vor, dass der Anschlag jeweils an seiner Oberseite eine im Wesentlichen U-förmige Nut aufweist. Diese U-förmige Nut dient der Aufnahme eines Klemmelements, mit dem eine Solarzelle geklemmt werden kann. Durch die Anordnung der U-förmigen Nut in dem Anschlag wird so nicht nur eine einfache Montage der Solarzellen ermöglicht, sondern insbesondere auch eine positionsgenaue Montage der Solarzellen, denn das Anschlagelement markiert das Ende der Befestigungsvorrichtung vor der gelenkigen Verbindung, d.h. dem Gelenkpunkt.

Die gelenkige Verbindung kann beispielsweise so realisiert sein, dass beide Schenkel jeweils einen oder mehrere Vorsprünge aufweisen, die ineinandergesteckt werden können und jeweils mit Bohrungen versehen sind, die im zusammengesteckten Zustand fluchten und durch die ein Bolzen oder ein (Zylinder)Stift gesteckt werden kann, um die gelenkige Verbindung zu realisieren. An den Enden des Zylinderstiftes kann ein Gewinde für eine Schraubmutter vorgesehen sein, um mit Hilfe der Schraubmuttern den Stift zu fixieren.

Das erfindungsgemäße Verbinderelement ist vorzugsweise aus einem Metall, beispielsweise aus Aluminium, gefertigt. Bevorzugt wird es aus Druckgussteilen hergestellt, beispielsweise aus Aluminiumdruckgussteilen oder Zinkdruckgussteilen. Es kann ferner auch aus Edelstahlteilen gefertigt sein.

Die Vorrichtung zur Befestigung von Solarelementen ist gekennzeichnet durch jeweils im Winkel zueinander mittels derartigen Verbinderelementen befestigten Profilschienen, an denen Solarelemente in einem Winkel zur Horizontalen geneigt befestigt sind. Diese Vorrichtung ist durch seitliche Verkleidungen gekennzeichnet, wobei zwischen den Solarelementen und der stirnseitigen höchsten Verkleidungswand ein Spalt ausgebildet ist. Auf diese Weise entsteht im Falle eines aufgrund eines Windes über das Solarelement streichenden Luftstroms ein Unterdruck im Inneren der Vorrichtung, sodass die im Winkel aneinander befestigten Profilschienen auf Zug belastet werden und auf diese Weise eine Stabilisierung der gesamten Vorrichtung realisierbar ist. Die Verkleidung wird dabei durch zwischen den Profilschienen angeordnete Bleche realisiert.

Weitere Merkmale und Vorteile der Erfindung sind Gegenstand der nachfolgenden Beschreibung von Ausführungsbeispielen anhand der Zeichnungen. Hierbei können die verschiedenen Merkmale jeweils für sich oder in Kombination miteinander verwirklicht sein.

In den Zeichnungen zeigen:
- Fig. 1: eine isometrische Darstellung eines erfindungsgemäßen Verbinderelements;
- Fig. 1a: eine andere Ansicht des in Fig. 1 dargestellten Verbinderelements in isometrischer Darstellung;
- Fig. 1b: eine isometrische Darstellung einer weiteren Ausgestaltung eines erfindungsgemäßen Verbinderelements;
- Fig. 2: eine andere Ausführungsform eines erfindungsgemäßen Verbinderelements in isometrischer Darstellung;
- Fig. 2a: eine weitere Ausführungsform eines erfindungsgemäßen Verbinderelements in isometrischer Darstellung;
- Fig. 3: eine teilweise weggebrochene schematische Darstellung einer erfindungsgemäßen Vorrichtung zur Befestigung von Solarelementen in isometrischer Darstellung;

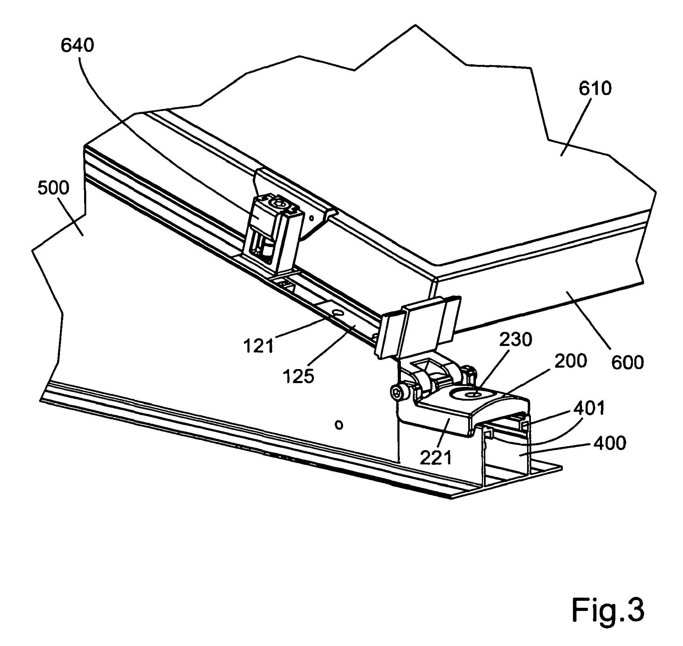

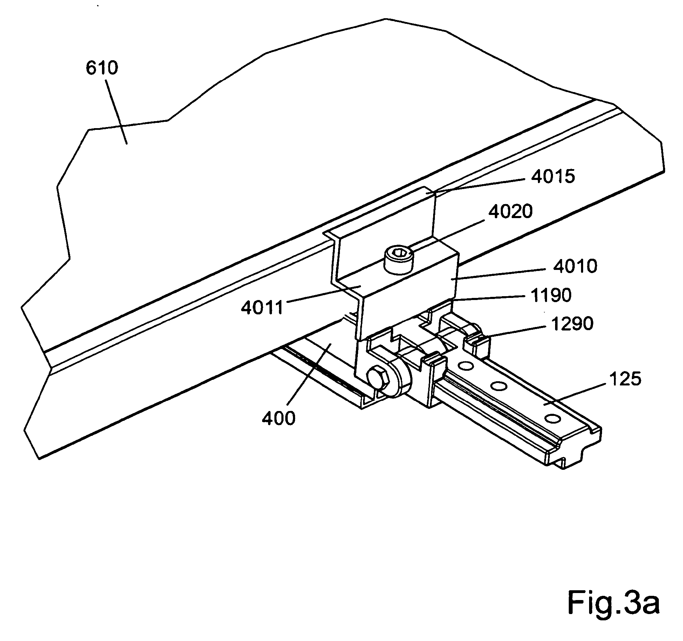

- Fig. 3: aeine erfindungsgemäße Vorrichtung zur Befestigung von Solarelementen in isometrischer Ansicht;

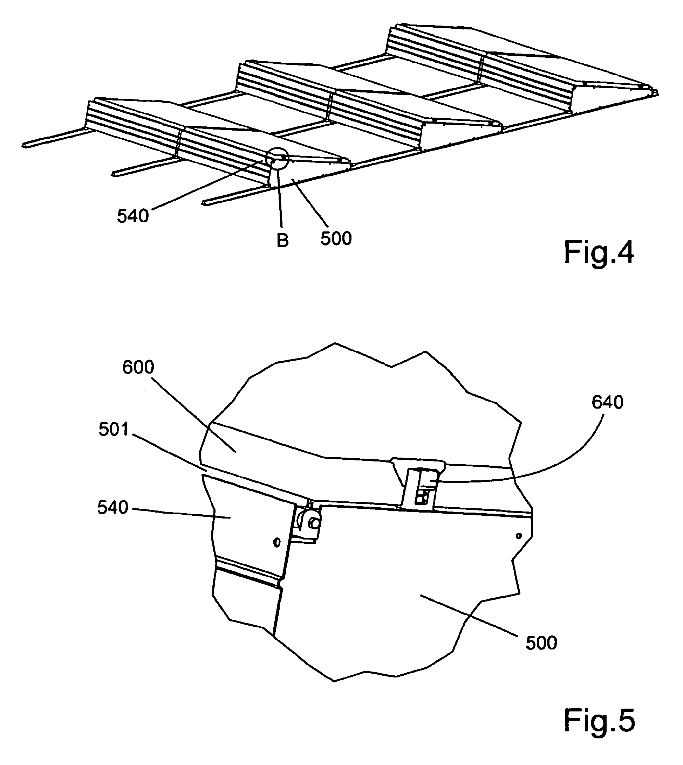

- Fig. 4: eine teilweise weggebrochene Darstellung einer erfindungsgemäßen Vorrichtung zur Befestigung von Solarelementen und
- Fig. 5: die in Fig. 4 mit B bezeichnete Einzelheit in vergrößerter Darstellung.

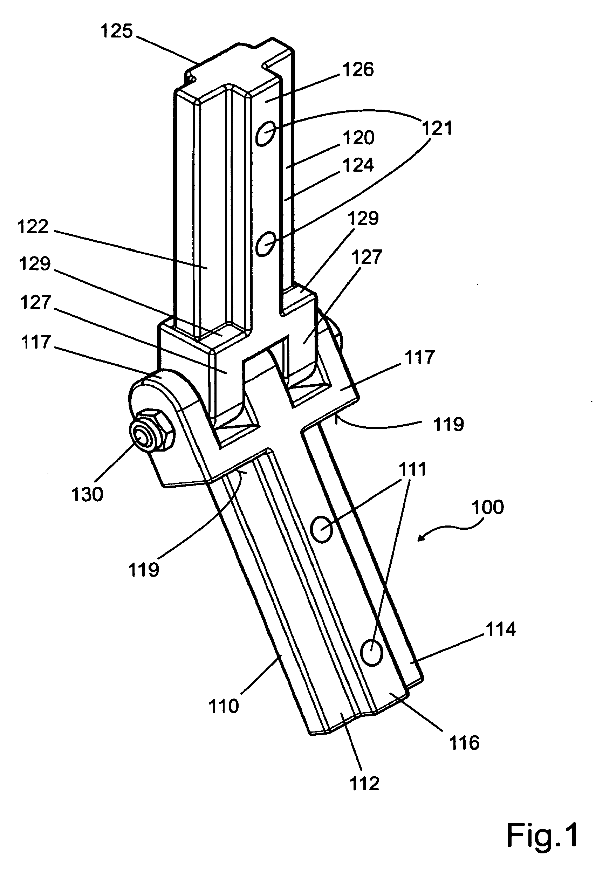

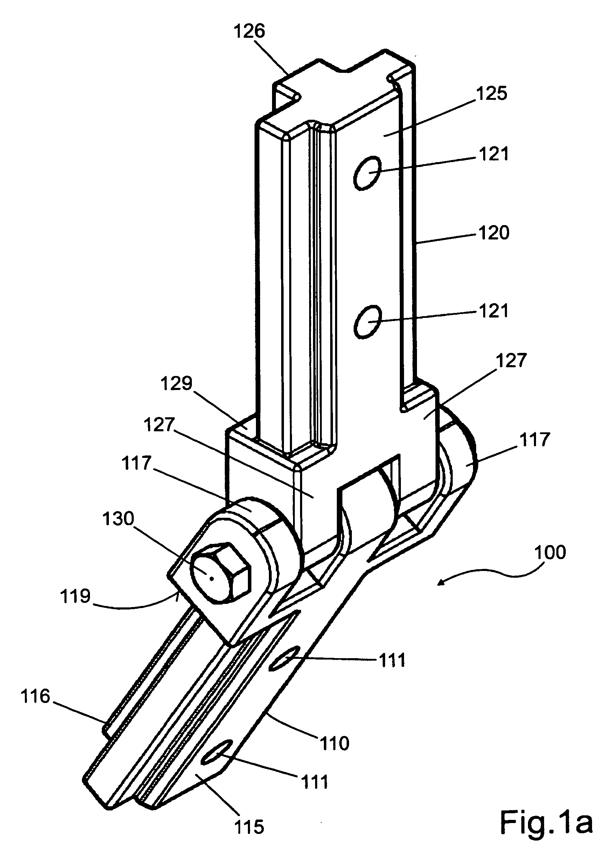

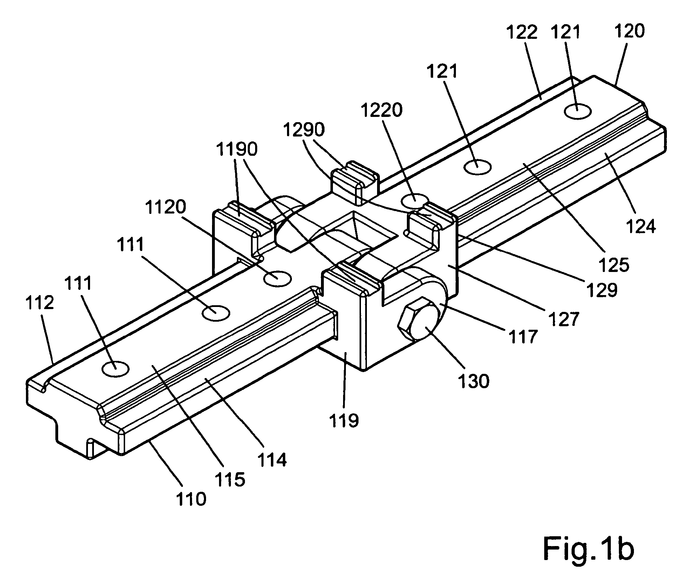

Ein Verbinderelement, dargestellt in Fig. 1 und Fig. 1a, weist zwei Schenkel auf, einen ersten Schenkel 110 und einen zweiten Schenkel 120, die gelenkig miteinander verbunden sind. Die gelenkige Verbindung der beiden Schenkel 110, 120 aneinander wird durch Vorsprünge 117, 127 realisiert, die jeweils fluchtende Öffnungen aufweisen, durch die im verbundenen Zustand eine beispielsweise Schraubverbindung 130 hindurchführbar ist, die die Verbindung der beiden Schenkel in einem beliebigen Winkel aneinander ermöglicht und die auch eine Fixierung der beiden Schenkel 110, 120 aneinander ermöglicht. Dabei sind die Vorsprünge 127 des Schenkels 120 so an die Vorsprünge 117 des Schenkels 110 angepasst, dass ein möglichst spielfreies Ineinandergreifen der beiden Schenkel bei gleichzeitig freier Drehbarkeit realisiert wird. Jeder der beiden Schenkel weist einen Befestigungsbereich 115, 125 auf, der im montierten Zustand in einer Profilschiene, beispielsweise in einer C-Profilschiene 400, wie sie beispielsweise schematisch in Fig. 3 dargestellt ist, bündig an der Oberseite der Profilschiene 400 anliegt (vergl. Fig. 3). Ein weiterer Befestigungsbereich 116, 126 ist jeweils dem Befestigungsbereich 115, 125 gegenüberliegend angeordnet. Dieser Befestigungsbereich liegt im montierten Zustand des Verbinderelements im Inneren der Profilschiene 400. Im Befestigungsbereich 115 bzw. 116 des ersten Schenkels 110, bzw. im Befestigungsbereich 125 bzw. 126 des zweiten Schenkels 120 sind Löcher 111 bzw. 121 vorgesehen, die bevorzugt mit Gewinden versehen sind. Diese Gewindelöcher dienen zum einen der Befestigung des Verbinderelements in der Profilschiene 400 mittels an sich bekannter Gewindeplatten, zum anderen können jeweils in dem zweiten Loch an der Profilschiene 400 beispielsweise weitere Vorrichtungen befestigt werden, beispielsweise Halteelemente für Solarzellen oder dergleichen. Die Befestigungsbereiche 115, 125 weisen jeweils Anschläge 119, 129 für die Profilschiene 400 auf, welche die Befestigungsbereiche 115, 125 bzw. 116, 126 gelenkseitig vor dem Gelenk begrenzen. In Fig. 1b ist eine weitere Ausgestaltung eines erfindungsgemäßen Verbinderelements dargestellt, bei dem diese Anschläge 119, 129 an ihrer Oberseite jeweils eine im Wesentlichen U-förmige Nut 1190, 1290 aufweisen. In diese U-förmigen Nuten 1190, 1290 werden Klemmelemente 4010 eingesetzt, die mittels Schrauben 4020 befestigt werden, deren Gewinde mit einem in dem Verbinderelement jeweils anschlagsseitig angeordneten Gewinde 1120, 1220 fluchtet. Durch Festdrehen der Schaube 4020 wird das Solarelement 610 auf diese Weise durch Klemmung befestigt (Fig. 3a).

Beide Schenkel 110, 120 weisen jeweils seitlich der Befestigungsbereiche 115, 125 wegstehende Vorsprünge 112, 114 bzw. 122, 124 auf, die so ausgebildet sind, dass sie an entsprechend in der Profilschiene 400 ausgebildeten und ihnen gegenüberliegenden Vorsprüngen 401 als Widerlager zur Anlage kommen. So liegen diese Vorsprünge beispielsweise bei einer C-förmigen Profilschiene an den C-förmigen Vorsprüngen an und bilden so das Widerlager.

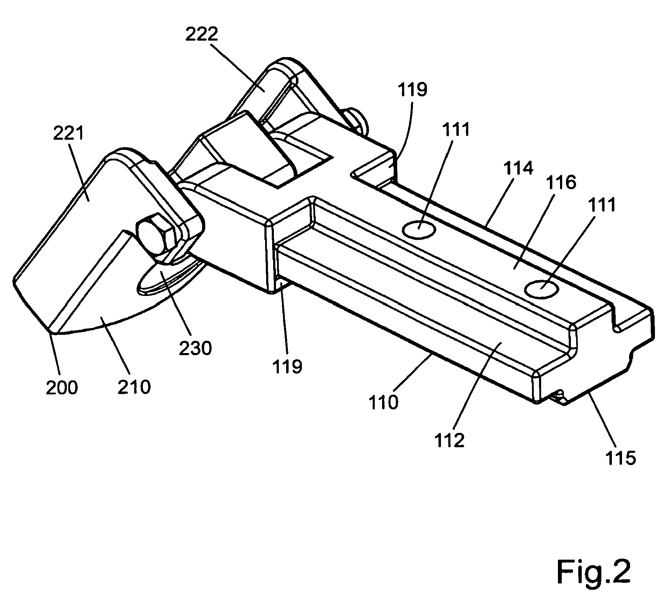

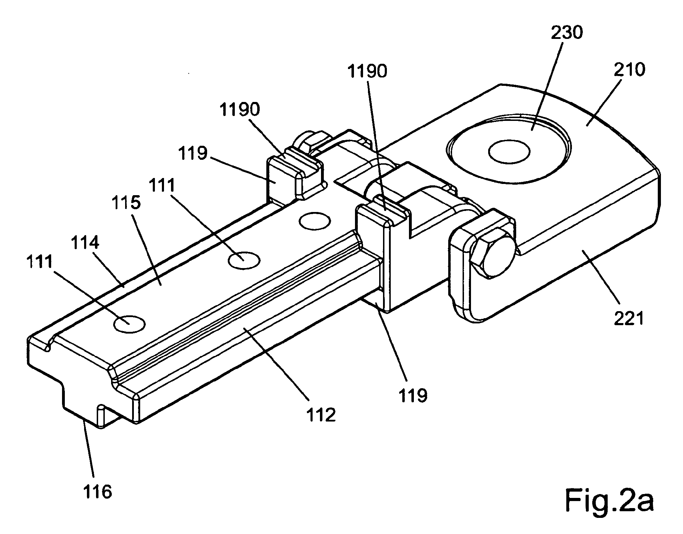

Eine weitere Ausgestaltung des erfindungsgemäßen Verbinderelements ist in Fig. 2 dargestellt. Das in Fig. 2 dargestellte Verbinderelement unterscheidet sich von dem in Fig. 1 und 1b dargestellten Verbinderelement dadurch, dass nur ein Schenkel den vorbeschriebenen Befestigungsbereich 115, den diesem gegenüberliegenden Befestigungsbereich 116 und die beiden Vorsprünge 112, 114 sowie die beiden Befestigungsgewindelöcher 111 aufweist, wohingegen der andere Schenkel 200 eine an seiner Unterseite im Wesentlichen ebene Fläche und an seiner Oberseite eine gewölbte Fläche, beispielsweise eine konvex gewölbte Fläche 210 aufweist. Diese konvexe Fläche 210 dient zum einen der Erhöhung der Stabilität des Verbinderelements durch eine erhöhte Materialstärke und verbessert zum anderen die Handhabung, da scharfe Kanten vermieden werden. Seitlich weist dieser Schenkel Stege 221, 222 auf, die eine C-förmige Profilschiene an ihrer Oberseite umgreifen, wie es in Fig. 3 schematisch dargestellt ist. Der Schenkel 200 weist eine Öffnung 230 zur Aufnahme eines Schraubenschaftes auf, um so den Schenkel auf an sich bekannte Weise mit einer Halteplatte an der Profilschiene befestigen zu können.

Das in Fig. 2a dargestellte Verbinderelement unterscheidet sich von dem in Fig. 2 dadurch, dass der Anschlag 119 an seiner Oberseite mit einer im Wesentlichen U-förmigen Nut 1190 versehen ist, die die in Verbindung mit Fig. 1b bzw. Fig. 3a nachstehend beschriebene Funktion aufweist.

Die vorgeschriebenen Verbinderelemente mit den Befestigungsbereichen und den seitlichen, von den Befestigungsbereichen abragenden Vorsprüngen weisen den Vorteil auf, dass sie in dem Inneren einer Profilschiene angeordnet werden können. Hierdurch ist eine winkelige Anordnung zweier Profilschienen in besonders enger Weise möglich, da der Drehpunkt auf der Innenseite der Profilschiene liegt, also nicht auf der Seite, auf der später beispielsweise Solarelemente befestigt werden.

In Fig. 3 ist schematisch die Befestigung zweier Profilschienen in einem Winkel zueinander unter Zuhilfenahme eines in Fig. 2 dargestellten Befestigungselements dargestellt. Wie der Fig. 3 zu entnehmen ist, liegt der Schenkel 200 auf der Oberseite einer Profilschiene 400 auf und umgreift die Profilschiene mit seinen Stegen 221, 222. Er wird auf an sich bekannte Weise beispielsweise mittels einer Gewindeplatte (in der Figur nicht zu erkennen) befestigt. Der Schenkel 110 des Befestigungselements greift dagegen in eine im Winkel schräg zur Profilschiene 400 angeordnete Profilschiene ein und wird dort mittels beispielsweise ebenfalls einer Gewindeplatte (nicht zu erkennen) befestigt. Das weitere Bohrloch 121 dient beispielsweise der Befestigung weiterer Bauteile. Auf dieser schräg angeordneten Profilschiene werden Solarelemente 610 befestigt, die in einem Rahmen 600 angeordnet sind. Die Befestigung geschieht beispielsweise mit an sich bekannten Klemmelementen 640.

In Fig. 3a ist schematisch die Befestigung eines Solarelements 610 an einer Profilschiene 400 mittels eines in Fig. 1b dargestellten Verbinderelements gezeigt, wobei der Befestigungsbereich 115 in das Innere der Profilschiene 400 gesteckt ist, während der Befestigungsbereich 125 in seinem nicht montierten Zustand dargestellt ist. Gleiche Elemente sind mit den gleichen Bezugszeichen wie in Fig. 1b dargestellt. Es wird insoweit auf die Ausführungen in Verbindung mit Fig. 1b vollinhaltlich Bezug genommen. Der isometrischen Darstellung in Fig. 3a ist sehr schön zu entnehmen, wie das Klemmelement 4010, das beispielsweise als zweifach abgewinkeltes Blech ausgebildet sein kann, in der Nut 1190 positioniert wird, weist einen abgewinkelten Bereich 4011 auf, in dem eine Bohrung für die Schraube 4020 vorgesehen ist, die mit dem entsprechenden Innengewinde 1120 (in Fig. 3a nicht zu sehen) im montierten Zustand fluchtet. Das Klemmelement 4010 weist ferner einen an den rechtwinklig abgewinkelten Bereich 4011 angrenzende Klemmbacken 4015 auf, der das Solarelement 610 übergreift und durch Eindrehen der Schraube 4020 klemmt und so in seiner Position hält.

Der Vorteil der Nuten 1190, 1290 liegt insbesondere darin, dass in Verbindung mit den Klemmelementen 4010 eine einfache Montage der Solarelemente 610 mittels der Klemmelemente 4010 möglich ist, aber auch eine positionsgenaue Montage, die insbesondere auch eine winkelige Anordnung der Solarelemente 610 ermöglicht, realisiert durch die gelenkige Verbindung der Schenkel 110, 120.

Wie bereits Fig. 3, aber noch deutlicher Fig. 4 und Fig. 5 zu entnehmen ist, weist die Vorrichtung zur Befestigung von Solarelementen seitliche Verkleidungen 500 auf, die beispielsweise als Bleche ausgebildet sind. Diese Verkleidungen umschließen die schräg angeordneten Solarelemente 610 komplett, wobei zwischen den Solarelementen 610 bzw. deren Rahmen 600 und der stirnseitigen höchsten Verkleidungswand 540 ein Spalt 501 angeordnet, der über die gesamte Längsseite verläuft. Aufgrund dieses Spalts 501 entsteht im Inneren der Verkleidung bei einem Luftstrom, der durch Winde hervorgerufen wird, ein Unterdruck, sodass die gesamte Vorrichtung auf Zug beansprucht wird und dadurch stabilisiert wird.

## Patentansprüche

1. Verbinderelement zur Verbindung von zwei Profilschienen (400) mit einem ersten und mit einem zweiten, gelenkig mit dem ersten verbundenen Schenkel (110; 120), wobei wenigstens ein Schenkel (110; 120) einen mittigen Befestigungsbereich (115; 125) und von diesem jeweils seitlich über den Befestigungsbereich ragende Vorsprünge (112, 114; 122, 124) aufweist, die im montierten Zustand an Vorsprüngen der Profilschiene (400) als Widerlager anliegen, **dadurch gekennzeichnet, dass** es einen Anschlag (119; 129) aufweist, welcher den mittigen Befestigungsbereich (115; 125) und die jeweils seitlich über dem Befestigungsbereich vorhandenen Vorsprünge (112, 114; 122, 124) gelenkseitig begrenzt.

2. Verbinderelement nach Anspruch 1, **dadurch gekennzeichnet, dass** der Anschlag (119; 129) an seiner Oberseite eine im Wesentlichen U-förmige Nut (1190; 1290) aufweist.

3. Verbinderelement nach Anspruch 1, **dadurch gekennzeichnet, dass** beide Schenkel (110; 120) jeweils einen mittigen Befestigungsbereich (115; 125) und von diesem jeweils seitlich über den Befestigungsbereich (115; 125) ragende Vorsprünge (112, 114; 122, 124) aufweisen, die im montierten Zustand an Vorsprüngen einer Profilschiene als Widerlager anliegen.

4. Verbinderelement nach Anspruch 1, **dadurch gekennzeichnet, dass** der Befestigungsbereich (115; 125) zwei insbesondere mit Gewinde versehene Löcher (111; 121) aufweist.

5. Verbinderelement nach Anspruch 1, **dadurch gekennzeichnet, dass** ein Schenkel (110) einen mittigen Befestigungsbereich (115) und von diesem jeweils seitlich über den Befestigungsbereich hervorstehende Vorsprünge (112, 114) aufweist, die im montierten Zustand an Vorsprüngen einer Profilschiene (400) als Widerlager anliegen und dass eine Fläche des anderen Schenkels (200) parallel zu den seitlichen Außenkanten seitliche Führungsleisten (221, 222) aufweist.

6. Verbinderelement nach Anspruch 5, **dadurch gekennzeichnet, dass** die den seitlichen Führungsleisten (221, 222) abgewandte Fläche (210) des Schenkels eine konvexe Wölbung aufweist.

7. Verbinderelement nach Anspruch 5 oder 6, **dadurch gekennzeichnet, dass** der andere Schenkel (200) jeweils wenigstens ein Lang- und/oder Rundloch aufweist.

8. Verbinderelement nach einem der vorstehenden Ansprüche, **dadurch gekennzeichnet, dass** es aus einem Metall, insbesondere Aluminium, Zink oder Edelstahl besteht.

9. Verbinderelement nach Anspruch 8, **dadurch gekennzeichnet, dass** es aus Druckgussteilen, insbesondere aus Aluminiumdruckgussteilen oder Zinkdruckgussteilen, besteht.

10. Vorrichtung zur Befestigung von Solarelementen, umfassend jeweils im Winkel zueinander mittels Verbinderelementen nach einem der Ansprüche 1 bis 9 befestigten Profilschienen, an denen Solarelemente in einem Winkel zur Horizontalen geneigt befestigt sind, **gekennzeichnet durch** seitliche Verkleidungen (500, 540) derart, dass zwischen dem Solarelement (610) und der stirnseitigen höchsten Verkleidungswand (540) ein Spalt (501) ausgebildet ist.

11. Vorrichtung nach Anspruch 10, **dadurch gekennzeichnet, dass** die Verkleidung (500, 540) durch zwischen den Profilschienen befestigte Bleche gebildet werden.

## Claims

1. A connector element for connecting two profile rails (400) with a first and second leg (110; 120), said second leg being connected in an articulated manner with the first leg, with at least one leg (110; 120) comprising a central fastening region (115; 125) and projections (112, 114; 122, 123) which protrude laterally therefrom beyond the fastening region and which in the mounted state rest on projections of the profile rail (400) as abutments, **characterized in that** it comprises a stop (119; 129) which delimits on the hinge side the middle fastening area (115; 125) and the projections (112, 114; 122, 124) respectively provided laterally beyond the fastening area.

2. A connector element according to claim 1, **characterized in that** the stop (119; 129) comprises a substantially U-shaped groove (1190; 1290) on its upper side.

3. A connector element according to claim 1, **characterized in that** both legs (110; 120) respectively comprise a central fastening region (115; 125) and projections (112, 114; 122, 124) which respectively laterally protrude therefrom beyond said fastening region (115; 125) and which rest in the mounted state on projections of a profile rail as an abutment.

4. A connector element according to claim 1, **characterized in that** the fastening region (115; 125) comprises two holes (111; 121) which are especially provided with a thread.

5. A connector element according to claim 1, **characterized in that** a leg (110) comprises a middle fastening region (115) and projections (112, 114) which respectively laterally protrude therefrom beyond the fastening region and which in the mounted state rest on projections of a profile rail (400) as abutments, and that an area of the other leg (200) comprises lateral guide strips (221, 222) parallel to the lateral outer edges.

6. A connector element according to claim 5, **characterized in that** the area (210) of the leg which faces away from the lateral guide strips (221, 222) has a convex curvature.

7. A connector element according to claim 5 or 6, **characterized in that** the other leg (200) respectively comprises an elongated and/or round hole.

8. A connector element according to one of the preceding claims, **characterized in that** it consists of a metal, especially aluminium, zinc or high-grade steel.

9. A connector element according to claim 8, **characterized in that** it consists of die-cast parts, especially aluminium die-cast parts or zinc die-cast parts.

10. An apparatus for fastening solar modules, respectively comprising profile rails fastened at an angle with respect to each other by means of connector elements according to one of the claims 1 to 9, to which solar modules are fastened at an angle inclined to the horizontal, **characterized by** lateral casings (500, 540), such that a gap (501) is formed between the solar module (610) and the casing wall (540) which is the highest on the face side.

11. An apparatus according to claim 10, **characterized in that** the casing (500, 540) is formed by sheets fastened between the profile rails.

## Revendications

1. Elément de liaison pour la liaison de deux rails profilés (400) comportant une première branche (110) et une seconde branches (120) articulée sur la première branche, au moins une branche (110, 120) comportant une zone de fixation médiane (115, 125) et à partir de cette zone des prolongements latéraux respectifs (112, 114, 122, 124) s'étendant au-delà de celle-ci et s'appliquant à l'état monté sur des prolongements du rail profilé (400) en faisant office d'aboutements,
**caractérisé en ce qu'**
il comporte une butée (119, 129) qui limite côté articulation la zone de fixation médiane (115, 125) et ses prolongements latéraux respectifs (112, 114, 122, 124).

2. Elément de fixation conforme à la revendication 1,
**caractérisé en ce que**
la butée (119, 129) comporte sur sa face supérieure une rainure (1190, 1290) essentiellement en forme de U.

3. Elément de fixation conforme à la revendication 1,
**caractérisé en ce que**
les deux branches (110, 120) comportent une zone de fixation médiane (115, 125) et à partir de cette zone des prolongements latéraux respectifs (112, 114, 122, 124) s'étendant au-delà de celle-ci et s'appliquant à l'état monté sur des prolongements d'un rail profilé en faisant office d'aboutements.

4. Elément de fixation conforme à la revendication 1,
**caractérisé en ce que**
la zone de fixation (115, 125) comporte deux trous (111, 121) en particulier équipés de taraudages.

5. Elément de fixation conforme à la revendication 1,
**caractérisé en ce qu'**
une branche (110) comporte une zone de fixation médiane (115) et respectivement à partir de cette zone des prolongements latéraux respectifs (112, 114) s'étendant au-delà de celle-ci et s'appliquant à l'état monté sur des prolongements d'un rail profilé (400) en faisant office d'aboutement, et une surface de l'autre branche (200) comporte des baguettes de guidage latérales (221, 222) parallèles aux bords latéraux externes.

6. Elément de fixation conforme à la revendication 5,
**caractérisé en ce que**
la surface (210) de la branche située à l'opposé des baguettes de guidage latérales (221, 222) présente une courbure convexe.

7. Elément de fixation conforme à la revendication 5 ou 6,
**caractérisé en ce que**
l'autre branche respective (200) présente au moins un trou longitudinal et/ou circulaire.

8. Elément de fixation conforme à l'une des revendications précédentes,
**caractérisé en ce qu'**
il est constitué en un métal, en particulier en aluminium, en zinc ou en acier spécial.

9. Elément de fixation conforme à la revendication 8,
**caractérisé en ce qu'**
il est constitué par des pièces moulées sous pression en particulier des pièces moulées sous pression en aluminium ou en zinc.

10. Dispositif de fixation d'éléments solaires comportant en faisant respectivement un angle les uns par rapport aux autres des rails profilés fixés les uns aux autres par des éléments de liaison conforme à l'une des revendications 1 à 9 et sur lesquels sont fixés des éléments solaires inclinés en faisant un angle par rapport à l'horizontale,
**caractérisé par**
des éléments de revêtement latéraux (500, 540) de sorte qu'une fente (501) soit formée entre l'élément solaire (610) et la paroi de revêtement frontalement la plus haute (540).

11. Dispositif conforme à la revendication 10,
**caractérisé en ce que**
le revêtement (500, 540) est formé par des tôles fixées entre les rails profilés.
